(19) Europäisches Patentamt
European Patent Office
Office européen des brevets

(11) **EP 3 438 885 B1**

(12) **EUROPEAN PATENT SPECIFICATION**

(45) Date of publication and mention
of the grant of the patent:
**13.01.2021 Bulletin 2021/02**

(51) Int Cl.:
***G06K 19/067*** (2006.01)

(21) Application number: **17184292.5**

(22) Date of filing: **01.08.2017**

(54) **WIRELESS IDENTIFICATION SYSTEM AND WIRELESS IDENTIFICATION METHOD**

DRAHTLOSIDENTIFIKATIONSSYSTEM UND DRAHTLOSIDENTIFIKATIONSVERFAHREN

SYSTÈME ET PROCÉDÉ D'IDENTIFICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.02.2019 Bulletin 2019/06**

(73) Proprietors:
• **Vestel Elektronik Sanayi ve Ticaret A.S.**
**45030 Manisa (TR)**
• **Ozyegin Universitesi**
**34794 Istanbul (TR)**

(72) Inventors:
• **GÜLBAHAR, Burhan**
**34794 Çekmeköy/Istanbul (TR)**

• **MEMISOGLU, Gorkem**
**45030 Manisa (TR)**
• **ABBAK, Mehmet**
**45030 Manisa (TR)**

(74) Representative: **Kehl, Ascherl, Liebhoff & Ettmayr Patentanwälte Partnerschaft mbB Emil-Riedel-Straße 18 80538 München (DE)**

(56) References cited:
**GB-A- 2 324 396        US-A1- 2006 125 491
US-B1- 6 330 939**

**Description**

**TECHNICAL FIELD**

The invention relates to a wireless identification system for identifying objects. The present invention further relates to a respective wireless identification method.

**BACKGROUND**

Although applicable to any type of object identification system, the present invention will mainly be described in conjunction with identification of fabric objects.

There exist a variety of different systems for identifying objects. For example RFID tags, active or passive, may be used as markers on objects. RFID tags may e.g. be provided on an object to identify the object or to control the object, e.g. to prevent theft of the object.

RFID tags comprise an antenna and a controller. The controller is also provided in passive RFID tags and is powered by energy harvested from the wireless signal that is emitted to communicate with the RFID tag.

RFID tags may e.g. be provided on garments. Garments however may be washed, e.g. at the end of production or during use, or otherwise be treated roughly. This means that the RFID tags, especially the controller, must be protected against such harsh environmental conditions. Usually this is achieved e.g. by molding the controller in plastic or the like. Such solutions are therefore complex, not adaptive and involve high costs.

Simpler optical solutions, like e.g. QR code based systems, are not applicable if the respective optical marker is not visible.

Document US 2006 /125 491 A1 discloses a method of detecting dielectric markers that are adapted in size according to a frequency of a scanning signal. Document GB 2 324 396 A discloses a system for detecting contents of sealed envelopes based on a change of capacitance. Document US 6 330 939 B1 discloses a system for detecting counterfeit bills based on their complex electrical permittivity.

Accordingly, there is a need for providing a simplified object identification.

**SUMMARY OF THE INVENTION**

The present invention provides a wireless identification system with the features of claim 1 and a wireless identification method with the features of claim 8.

The present invention is based on the finding that every element with a dielectric permittivity that is different than in the surroundings of the object will provide a scattered signal when illuminated with a respective signal, e.g. a high frequency signal with a frequency in the microwave range.

The present invention uses a technique that may be called an inverse backscatter technique. The inverse backscatter is based on the fact that when a signal is emitted into a space that accommodates an element with a respective dielectric permittivity, a current is induced in this element. The induced current in change generates an electromagnetic field by itself. The electromagnetic field that is generated by the induced current may be measured or detected and the structure of the element may be determined based on the measured field.

The present invention uses inverse backscatter by providing the uniquely structured pattern that may be attached to the object. This means that in an application the object may carry the uniquely structured pattern. The dielectric properties of the uniquely structured pattern may be chosen such that they differ from the dielectric properties of the object and the volume of the object space.

The uniquely structured pattern may e.g. be a copper based pattern. Such a copper based uniquely structured pattern may e.g. be produced by knitting the uniquely structured pattern with a copper wire. It is understood that any other material may be used that comprises the predefined dielectric properties. The predefined dielectric properties may e.g. simply define that the material of the uniquely structured pattern needs to have other dielectric properties than the material of the object. It is further understood, that the uniquely structured pattern may e.g. also be provided as an adhesive label or the like. Such an adhesive label may e.g. be provided as a textile label with the uniquely structured pattern knitted onto the cloth. As an alternative, the uniquely structured pattern may e.g. be printed on a paper label with conductive ink. A wireless signal is then emitted into a space that accommodates the object to be identified. As explained above, this signal will induce currents in the uniquely structured pattern and the currents will produce an electromagnetic field around the uniquely structured pattern that may be received as the scattered signal.

The signal receiver may be any type of receiver that is capable of receiving at least the scattered signal from various different positions around the object. In reality the signal receiver will however always receive a combination of the emitted signal and the scattered signal.

The signal receiver e.g. in combination with the signal processor may then use the measured data to reconstruct the structure of the uniquely structured pattern. Reconstructing in this context may e.g. refer to determining the dielectric permittivity for the points or voxels in the object space. Determining the dielectric permittivity allows differentiating the uniquely structured pattern from the object and determining its shape.

It is understood, that the signal emitter and the signal receiver may e.g. comprise a number, i.e. one or more, of antennas. Such antennas may e.g. be adapted according to the wavelengths of the wireless signals that are used in the respective application.

It is further understood, that the signal processor may e.g. comprise a measurement device, like e.g. a vector network analyzer, a general purpose computer or the like. For example a vector network analyzer, VNA, or any other measurement device, like e.g. an oscilloscope, may be coupled to one or a plurality of receiving antennas and may perform the signal measurement. Reconstructing the structure of the uniquely structured pattern may then e.g. be performed either by a digital signal processor, DSP, in the NVA or oscilloscope. Alternatively, the measured data may be transmitted to an external DSP or any other computer that performs the calculations necessary for reconstructing the uniquely structured pattern.

Further embodiments of the present invention are subject of the further subclaims and of the following description, referring to the drawings.

In a possible embodiment, the signal processor may be configured to solve an optimization problem based on the received superimposed signals to reconstruct the structure of the uniquely structured pattern.

The following electromagnetic wave equations apply to the received signal, i.e. to the measurement of the scattered field from the uniquely structured pattern.

The total field at a point around the object space is the total of the incident and scattered field, which can be written, for a transmitter at position j, and a receiver at position i, and a wireless signal with frequency m, as:

$$E_j^{(m)tot}(r_i) = E_j^{(m)inc}(r_i) + E_j^{(m)s}(r_i)$$

The scattered field can be written as:

$$\overline{E}^{s}(\overline{r}) = i\omega\mu_0 \int_V \overline{\overline{G}}(\overline{r},\overline{r}') \cdot \overline{E}^{t}(\overline{r}')\chi(\overline{r}')\,\mathrm{d}v'$$

wherein $\chi$ (Ksi) is the contrast between the uniquely structured pattern and the background. G is the Green function. The Green function is the solution of the vector wave equation and belongs to the Dirac delta function.

The equivalent current of the scattered object is defined as:

$$\overline{J}^{eq}(\overline{r}) = \overline{E}^{t}(\overline{r})\chi(\overline{r})$$

The scattered field is the total field generated by the current distribution on the object under illumination, i.e. the uniquely structured pattern.

The total field is the sum of the incident field and the scattered field, and can be written as;

$$\overline{E}^{t}(\overline{r}) = \overline{E}^{i}(\overline{r}) + i\omega\mu_0 \int_V \overline{\overline{G}}(\overline{r},\overline{r}') \cdot \overline{E}^{t}(\overline{r}')\chi(\overline{r}')\,\mathrm{d}v'$$

Because both sides of the equations include the total electrical field, finding the object function $\chi$ becomes a non-linear optimization problem. Any type of well-known optimization methods may therefore be used to solve the optimization problem. By minimizing the error function, the object function is obtained, which corresponds to the dielectric relativity and conductivity ($\sigma$) distribution over the object space. The above explained optimization problem may e.g. be solved by the signal processor.

The signal processor by solving the above mentioned optimization problem may reconstruct the structure of the uniquely structured pattern. This means, that as a result of solving the optimization problem, the structure of the uniquely structured pattern will be known in the signal processor and may e.g. be further analyzed to identify the uniquely structured pattern and therefore also the object to be identified.

Solving the above described optimization problem may e.g. be performed either by a digital signal processor, DSP, in the NVA or oscilloscope. Alternatively, the measured data may be transmitted to an external DSP or any other computer that performs the calculations necessary for solving the optimization problem.

The term solution domain refers to the optimization problem being limited to the space indicated by the solution domain. Limiting the space of the solution domain may be necessary due to the memory limitations of current computer systems. The solution domain may be limited to the object carrying the uniquely structured pattern. This means that the solution domain and the object may be the same. The mathematical optimization problem is then solved for the solution domain. To solve the mathematical problem, that solution domain is first discretized into pixels in two dimension or voxels in three dimensions. Each pixel or voxel is idealized as having homogenous and specific dielectric and conductive properties. As stated before the equivalent current of the scattered object can be written as

$$\bar{J}^{eq}(\bar{r}) = \bar{E}^t(\bar{r})\chi(\bar{r})$$

This value is computed for each of the pixels or voxels in the solution domain. The cost function expresses the difference between the measured and the calculated fields. To obtain a correct map of dielectric and conductive features, an algorithm minimizing the differences between the measured and calculated fields is applied. Therefore, if F is the cost function it can written as

$$\bar{F}^d(\bar{\chi}) = \bar{S}^m(\bar{\chi}) - \bar{S}^c(\bar{\chi})$$

wherein $S^m$ refers to the measured field (whole combination for all the transmitting and receiving antennas), and wherein $S^c$ refers to the calculated field (according to $\chi$ ($\chi$)).

The above cost function may then be minimized.

In an embodiment, the signal processor is configured to perform regularization on data that forms the basis of the optimization problem and is determined based on the received superimposed signals.

Regularization in general may be applied to objective functions in ill-posed problems formulated as optimization problems. Regularization may be seen as introducing additional information in order to solve an ill-posed problem or to prevent overfitting. The signal processor may use different regularization methods, like e.g. the Tikhonov regularization or the early stopping regularization. Other possible regularization methods comprise regularization for sparsity, like e.g. L1 regularization or elastic net regularization, proximal regularization methods, and the like.

Regularization in this respect refers to regularizing terms, which can be additive or multiplicative, being added to the cost function to eliminate strong local variations. With inverse scattering large fluctuations can easily be attained due to small errors on the data, this may be called an ill-posed optimization problem. To counter this ill-posed nature of the optimization problem, regularization may be applied. With added additive and multiplicative regularization terms the cost function may be written as:

$$\bar{F}(\bar{\chi}) = \left(\bar{F}^d(\bar{\chi}) + \bar{F}^{ra}(\bar{\chi})\right)\bar{F}^{rm}(\bar{\chi})$$

wherein $F^d$ refers to the cost function (according to difference and calculated field) and wherein $F^{ra}$ refers to an additive regularization term, and wherein $F^{rm}$ refers to a multiplicative regularization term.

In another possible embodiment, the signal processor may be configured to determine a 2D image of the uniquely structured pattern.

If the signal processor determines the structure of the uniquely structured pattern in three-dimensional space, the signal processor may easily generate or determine a 2D image. The signal processor may e.g. determine the orientation of the uniquely structured pattern in the three-dimensional space and determine a viewport that comprises the uniquely structured pattern, especially in a top view.

The signal processor may e.g. provide black image pixels in the image if the respective pixels represent a point in the object space that is covered by a piece of the uniquely structured pattern. If the respective pixels represent a point in the object space that is not covered by a piece of the uniquely structured pattern, the signal processor may provide a white pixel.

The obtained image may then be further processed e.g. with image recognition algorithms that extract information encoded in the uniquely structured pattern.

In a possible embodiment, the uniquely structured pattern may comprise the structure of a 1D or 2D barcode.

If the uniquely structured pattern comprises the structure of a 1D or 2D barcode, it is easily possibly to extract the content that is encoded in the uniquely structured pattern.

Possible types of 1D barcodes comprise e.g. EAN-8, EAN-13, UPC-A, UPC-B, UPC-C, UPC-D or UPC-E, IAN, JAN, ITF or 2/5 interleaved, Code39, Code 93, Codebar, and Code128. Possible types of 2D barcodes comprise e.g. Codablock, Code 49, PDF417, QR Code, DataMatrix, MaxiCode, Aztec-Code and Dotcode.

For example, the digital signal processor may comprise algorithms that may decode the respective type of barcode and extract the respective information.

The information may vary from application to application. Such information may especially comprise information that identifies the object and/or the manufacturer and/or the owner of the object or the like. It is understood, that any other information may also be encoded in the uniquely structured pattern.

In an embodiment, the uniquely structured pattern may comprise position markers and the digital signal processor is configured to determine the position of the position markers and unfold the uniquely structured pattern if the specific markers are not in a common plane.

The uniquely structured pattern may e.g. be attached to solid objects. In this case the uniquely structured pattern will not be folded unless the object is damaged. However, the uniquely structured pattern may also be attached e.g. to textiles. In this case the uniquely structured pattern may e.g. be folded or scrunched up.

The position markers may e.g. be specific markers that define the boundaries or any predefined position in the uniquely structured pattern. With QR codes such position markers may e.g. be the corner markers that are provided on three of the corners of the QR code and the orientation marker that is provided on the fourth corner. Other codes may comprise other types of position markers. In 1D codes such position markers may be the first and last element of the code.

Unfolding in this respect refers to a geometric operation. By determining the positions of the position markers in 3D space, the signal processor may e.g. determine if and how the uniquely structured pattern is folded or scrunched up and unfold the uniquely structured pattern accordingly.

Unfolding in this context refers to unfolding or unwrapping the folded or scrunched up uniquely structured pattern such that the uniquely structured pattern lies in a plane and may be analyzed as usual.

In a possible embodiment, the signal emitter may comprise a plurality of emitting antennas and is configured to emit the wireless signal sequentially via each of the emitting antennas.

Gathering enough data to construct the above mentioned optimization problem requires a comprehensive measurement of the superimposed signal.

By "comprehensive" in this context it is meant that measurements from different angles and locations around the object space are performed. In addition, a wide frequency spectrum is used in such a comprehensive measurement. Therefore, the signal emitter may be configured to emit the wireless signal via the emitting antennas one by one and one after the other. The signal emitter will therefore emit the wireless signal into the object space from different points in space around the object space.

Further, the signal emitter may e.g. comprise respective signal generators that generate e.g. a continuous wave signal or the like with a predetermined frequency or frequency-range. It is understood that a signal generator with adjustable output frequency may be used to generate wireless signals with different frequencies. The frequencies may e.g. be in the microwave range. It is understood, that instead of continuous wave signals, any other signal like e.g. modulated signals, may be used.

With an increasing number of emitting antennas, the spatial resolution of the "illumination" of the object in the object space may be increased and more accurate measurements may be performed.

Properties of the wireless signal, like e.g. the dynamic range, the frequency bandwidth and the output power may be adapted to improve the signal to noise ratio (SNR), which may improve the field analysis and therefore the obtained image of the uniquely structured pattern.

In another possible embodiment, the signal receiver may comprise a plurality of receiving antennas and is configured to receive the wireless signal in parallel via each of the receiving antennas.

As already indicated above, a comprehensive measurement is needed to acquire enough data to solve the above mentioned optimization problem with the required accuracy.

By increasing the number of points around the object space, i.e. the number of receiving antennas, the superimposed signal may be measured with higher accuracy. Therefore, by increasing the number of receiving antennas the accuracy of the identification system may be increased.

As explained above, the measurement antennas may e.g. be coupled to a Vector Network Analyzer, VNA, that performs the actual measurements. If multiple measurement antennas are used, a multi-port VNA.

In a possible embodiment, the signal emitter may comprise at least one movable emitting antenna. In addition or as alternative the signal receiver may comprise at least one movable receiving antenna.

Above it is explained that the signal emitter may comprise a plurality of emitting antennas and that the signal receiver may comprise a plurality of receiving antennas.

However, as an alternative, the signal emitter may e.g. comprise one or more movable emitting antennas. Such movable emitting antennas may e.g. be mounted on a mechanical structure that may be driven, e.g. rotated, by an electric motor or manually by a user. Such a structure may e.g. comprise a rotating plate that on the edge carries the antennas and is provided under the object space. The antennas may further e.g. be positioned on posts that elevate the antennas from the plate. The posts may also allow adjusting the height of the antennas manually or motor-driven, i.e. automatically.

The same applies to the signal receiver and the receiving antennas. Further, the emitting antennas and the receiving antennas may be provided on the same mechanical structure.

It is further possible to use the same antennas as receiving and emitting antennas. The driving circuitry of the antennas may e.g. allow switching the antennas from emitting to receiving mode and vice versa.

The single emitting or receiving antennas may e.g. be provided as microstrip antennas or as conductive structures on a substrate or the like.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:

Fig. 1 shows a block diagram of an embodiment of a wireless identification system according to the present invention;

Fig. 2 shows a block diagram of another embodiment of a wireless identification system according to the present invention;

Fig. 3 schematically shows an exemplary uniquely structured pattern for use with a wireless identification system or method according to the present invention; and

Fig. 4 shows a flow diagram of an embodiment of a wireless identification method according to the present invention.

In the figures like reference signs denote like elements unless stated otherwise.

## DETAILED DESCRIPTION OF THE DRAWINGS

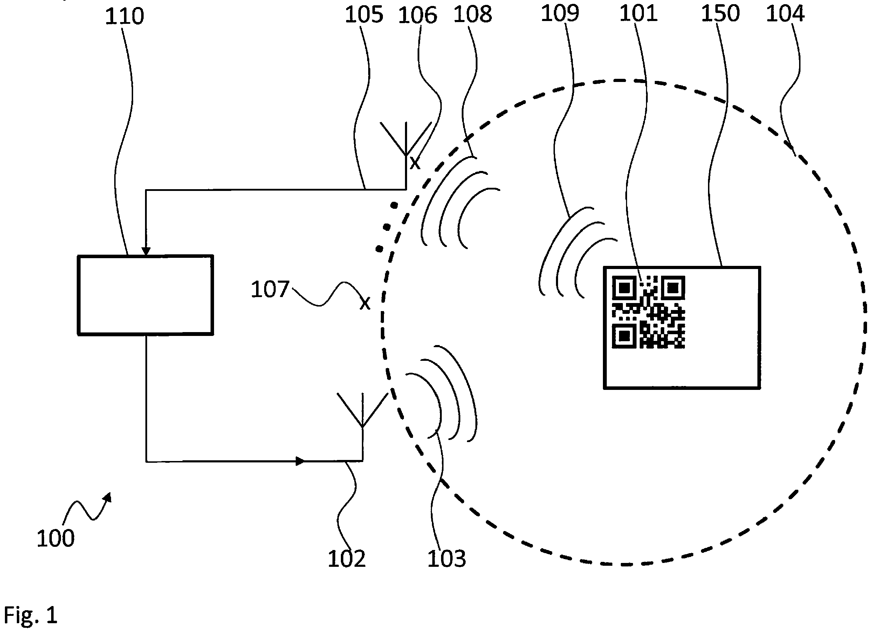

Fig. 1 shows a block diagram of a wireless identification system 100. The wireless identification system 100 serves for identifying an object 150. In fact, the object 150 is indirectly identified via a uniquely structured pattern 101 that may be attached to the object 150. The wireless identification system 100 comprises in addition to the uniquely structured pattern 101 a signal emitter 102 and a signal receiver 105. In the wireless identification system 100 both, the signal emitter 102 and the signal receiver 103, are coupled to a signal processor 110.

The uniquely structured pattern 101 may e.g. be a copper structure that is knitted into the object, especially a textile object like a garment or the like. It is understood, that the uniquely structured pattern 101 may comprise any other type of structure that comprises a dielectric permittivity that is different than the object's permittivity. The different permittivities will allow differentiating the uniquely structured pattern 101 from the object 150. Other possible uniquely structured patterns 101 may e.g. be provided as lead frame or punch scrap. Further uniquely structured patterns 101 may e.g. be provided as adhesive labels with conductive material on the label. Such conductive material may e.g. be conductive ink or the like.

The signal emitter 102 may emit a wireless signal 103 into the object space 104. The object space 104 is the space that is covered by the wireless identification system 100 to identify the object 150. If the object 150 is outside of the object space 104 it may therefore not be detected any more.

The signal emitter 102 although only shown as antenna may comprise any signal generation element that is necessary to generate the wireless signal 103 as required or desired for the respective application. Such elements may e.g. comprise oscillators, filters, attenuators and amplifiers. It is understood, that the signal generation may also be performed in the signal processor 110 and that the signal emitter 102 may actually be only an antenna.

The wireless signal 103 may e.g. be a broadband wireless signal in the microwave frequency band. The wireless signal 103 may further comprise a modulated signal, e.g. a frequency modulated signal that performs a frequency sweep in a predetermined frequency range or the like.

The wireless signal 103 when emitted into the object space 104 will eventually hit the uniquely structured pattern 101. In the uniquely structured pattern 101 the wireless signal 103 will induce electric currents. The induced electric currents will then cause the uniquely structured pattern 101 to emit a scattered signal 109 that may be received by the signal receiver 105.

The signal receiver 105 is shown as simple antenna that is connected to the signal processor 110. It is understood, that the signal receiver 105 may however comprise any element that is required to receive the scattered signal 109. Such elements may comprise oscillators, filters, attenuators and amplifiers. It is understood, that any signal processing may also be performed in the signal processor 110 and that the signal receiver 105 may actually be only an antenna.

The signal receiver 105 will however not only receive the scattered signal 109. Instead the signal receiver 105 will receive a superimposed signal 108 that is a superimposition of the wireless signal 103 and the scattered signal 109.

In the signal processor 110 the structure of the uniquely structured pattern 101 may be determined based on a comprehensive measurement of the superimposed signal 108 at different positions 106, 107. Further, different positions for the signal emitter 102 may also be chosen. Although only two positions 106, 107 are shown, it is understood, that these positions 106, 107 represent a plurality of positions around the object space 104 at which the signal receiver 105 may receive the superimposed signal 108. Although not explicitly shown, the signal emitter 102 may also emit the wireless signal 103 into the object space 104 from a plurality of different positions.

The superimposed signals 108 that are received with all the different measurements from different positions 106, 107 may form the basis for a non-linear optimization problem as already explained above. Further, the more measurements are performed the better the data basis will be for solving the non-linear optimization problem. The signal processor 110 may comprise a computer program that performs the calculations that are necessary to prepare and solve the optimization problem based on the measured data. The signal processor 110 may also perform additional steps, like a regularization of data that forms the basis of the optimization problem and is determined based on the received superimposed signals 108.

The solution of the optimization problem will result in a three-dimensional representation of the object space 104. In that three-dimensional representation object or image recognition algorithms may be applied to identify the uniquely structured pattern 101 and extract the structure of the uniquely structured pattern 101. The signal processor 110 may then e.g. determine a 2D image of the uniquely structured pattern 101 that may e.g. be a 1D or 2D barcode.

To finally identify the object, the signal processor 110 may apply respective identification algorithms to extract the content of the uniquely structured pattern 101. A database may then e.g. relate the extracted content to the respective object 150. A 1D or 2D barcode may e.g. represent a unique ID of the object or provide other relevant information like e.g. the owner or the manufacturer or the like.

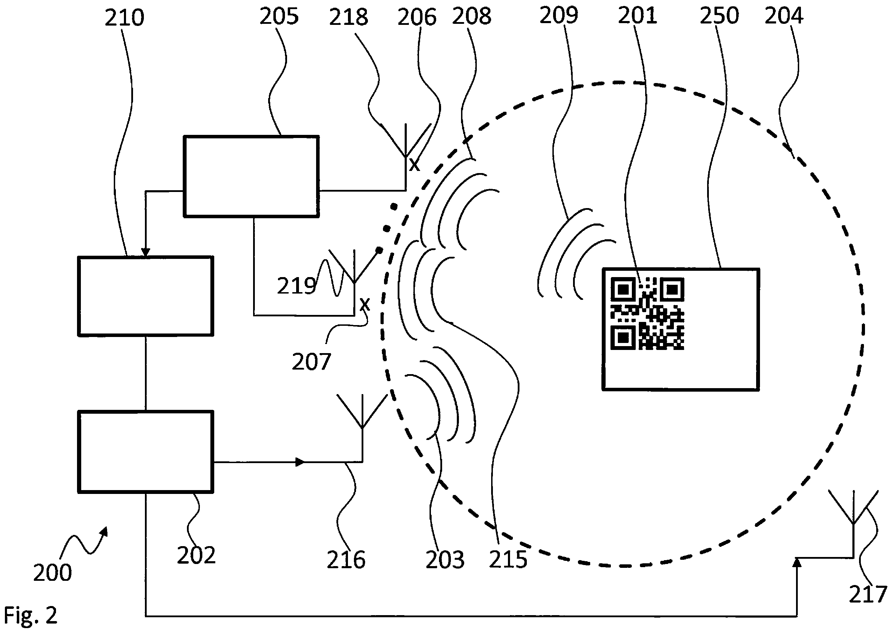

Fig. 2 shows a block diagram of a wireless identification system 200. The wireless identification system 200 is based on the wireless identification system 100. Therefore, the wireless identification system 200 comprises a signal emitter 202 and a signal receiver 205 that are both coupled to a signal processor 210.

In contrast to the wireless identification system 100 in the wireless identification system 200 the signal emitter 202 comprises two emitting antennas 216, 217. Further, the signal receiver 205 comprises two receiving antennas 218, 219. Of the emitting antennas 216, 217 only one antenna will emit the wireless signal 203 at a time. In contrast, all of the receiving antennas 218, 219 will receive the superimposed signal 208, 215 in parallel.

It is understood, that the emitting antennas 216, 217 and the receiving antennas 218, 219 are just exemplarily shown for any number of emitting and receiving antennas. As explained above, a comprehensive measurement is necessary to reconstruct the structure of the uniquely structured pattern 201. To allow sending the wireless signal 203 and receiving the superimposed signal 208, 215 from various positions 206, 207 either more emitting antennas 216, 217 and/or more receiving antennas 218, 219 may be provided or the emitting antennas 216, 217 and the receiving antennas 218, 219 may be provided as movable antennas that may e.g. be rotated on a circular circumference, 2D, or a spherical circumference, 3D, around the object space 204.

It is understood, that the emitting antennas 216, 217 and the receiving antennas 218, 219 may comprise any type of antenna, like e.g. microstrip antennas, parabolic antennas, horn antennas or the like.

In the wireless identification system 200 the signal emitter 202 and the signal receiver 205 are provided as separate units that are connected to the signal processor 210. The signal emitter 202 may e.g. be a dedicated signal generation device and the signal receiver 205 may e.g. be a dedicated signal measurement device. The dedicated devices may comprise any type of hardware and/or software that is needed to perform the respective task, like e.g. signal generators, oscillators, amplifiers, attenuators, signal processors and the like.

Further, the signal emitter 202 and the signal receiver 205 may e.g. communicate with the signal processor 210 via digital data and control interfaces. As an alternative, the signal processor 210 may perform the signal generation and provide the analog signals to the signal emitter 202. The signal receiver 205 may only perform the analog part of the signal reception and provide analog signals to the signal processor 210. The signal processor 210 may e.g. be a vector network analyzer or the like.

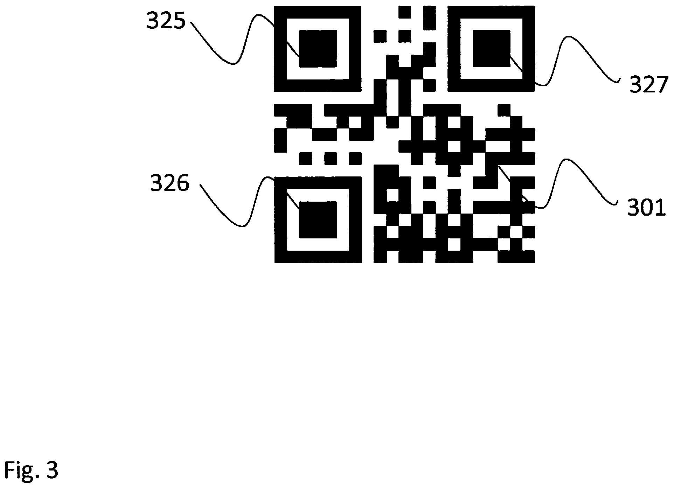

Fig. 3 schematically shows an exemplary QR code as possible embodiment of a uniquely structured pattern 301. The QR code of Fig. 3 may e.g. be used with a wireless identification system 100, 200 or a wireless identification method according to the present invention.

The QR code 301 comprises three position markers 325, 326 and 327. These position markers 325, 326 and 327 allow QR code scanners to identify the QR code and determine the orientation of the QR code.

After determining e.g. a 2D image of the QR code 301 the signal processor 110, 210 may further apply a code scanning or detection algorithm to the 2D image to extract the information of the QR code.

This means that after scanning the object space 104, 204 for the uniquely structured pattern 101, 201, and generating the 2D image, the QR code 301 may be treated like any other QR code that may be visually recorded or inspected. However, with the present invention it is not necessary to provide visual contact between a camera and the QR code 301.

Nevertheless, it is understood, that the wireless identification system 100, 200 may also comprise an additional camera that scans the object space 104, 204 for the presence of a uniquely structured pattern 101, 201. In case that such a uniquely structured pattern 101, 201 is visually detected, the wireless scanning for a uniquely structured pattern 101, 201 may be skipped.

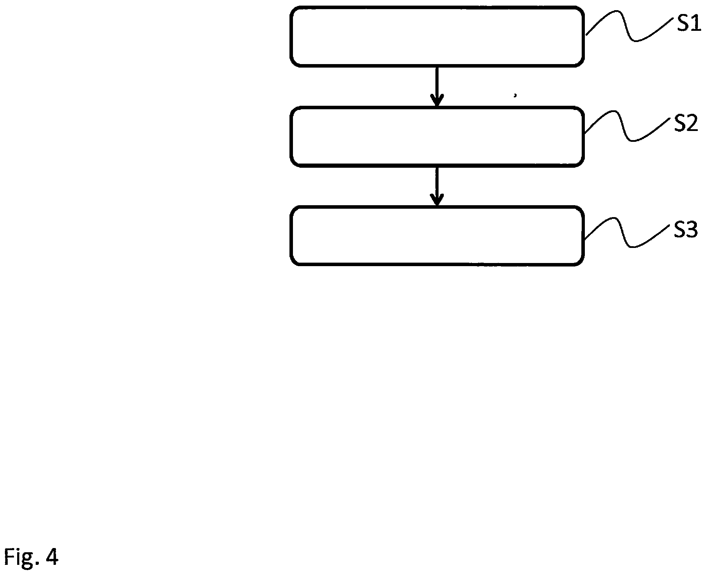

For sake of clarity in the following description of the method based Fig. 4 the reference signs used above in the description of apparatus based Figs. 1 - 3 will be maintained.

Fig. 4 shows a flow diagram of a wireless identification method for identifying an object 150, 250 that carries a uniquely structured pattern 101, 201, 301 comprising predefined dielectric properties.

The wireless identification method comprises emitting S1 a wireless signal 103, 203 into an object space 104, 304 that is configured to accommodate the object 150, 250 with the uniquely structured pattern 101, 201, 301. The method further comprises receiving S2 from different positions 106, 107, 206, 207 around the object 150, 250 a superimposed signal 108, 208, 215 caused by a superimposition of the emitted wireless signal 103, 203 and a scattered signal 109, 209 as scattered by the uniquely structured pattern 101, 201, 301. The method also comprises reconstructing S3 the structure of the uniquely structured pattern 101, 201, 301 based on the received superimposed signal 108, 208, 215.

Emitting S1 may be performed with a number, i.e. one or more, of emitting antennas 216, 217 sequentially via each of the emitting antennas 216, 217. In addition or as alternative the emitting antennas 216, 217 may be movable.

Receiving S2 may be performed with a number, i.e. one or more, of receiving antennas 218, 219 and the superimposed signal 108, 208, 215 is received in parallel via each of the receiving antennas 218, 219. In addition or as alternative, the receiving antennas 218, 219 may be movable.

Reconstructing S3 may comprise solving an optimization problem based on the received superimposed signals 108, 208, 215 to reconstruct the structure of the uniquely structured pattern 101, 201, 301. Further, solving an optimization problem may comprise performing regularization on data that forms the basis of the optimization problem and is determined based on the received superimposed signals 108, 208, 215.

After solving the optimization problem, the step of reconstructing S3 may further comprise determining a 2D image of the uniquely structured pattern 101, 201, 301. The uniquely structured pattern 101, 201, 301 may e.g. comprise the structure of a 1D or 2D barcode. In this case the result of determining the 2D image may yield similar results as if a camera took a picture of the uniquely structured pattern 101, 201, 301.

The uniquely structured pattern 101, 201, 301 may comprise position markers 325, 226, 327. Especially in textile-based objects the uniquely structured pattern 101, 201, 301 may be folded or scrunched up. Reconstructing S3 may therefore comprise determining the position of the position markers 325, 226, 327 in three-dimensional space and unfolding the uniquely structured pattern 101, 201, 301 if the specific markers are not in a common plane or within a predetermined margin of a common plane.

**List of reference signs**

| | |
|---|---|
| 100, 200 | wireless identification system |
| 101, 201, 301 | uniquely structured pattern |
| 102, 202 | signal emitter |
| 103, 203 | wireless signal |
| 104, 304 | object space |
| 105, 205 | signal receiver |
| 106, 107, 206, 207 | position |
| 108, 208, 215 | superimposed signal |
| 109, 209 | scattered signal |
| 110, 210 | signal processor |

216, 217    emitting antenna
218, 219    receiving antenna

325, 226, 327    position markers

150,250    object

**Claims**

1. Wireless identification system (100, 200) for identifying an object (150, 250), the wireless identification system (100, 200) comprising:

    a uniquely structured pattern (101, 201, 301) comprising predefined dielectric properties and configured to be attached to the object (150, 250),
    a signal emitter (102, 202) configured to emit a wireless signal (103,203) into an object space (104, 304) that is configured to accommodate the object (150, 250) with the uniquely structured pattern (101, 201, 301),
    a signal receiver (105, 205) configured to receive from different positions (106, 107, 206, 207) around the object (150, 250) a superimposed signal (108, 208, 215) caused by a superimposition of the emitted wireless signal (103, 203) and a scattered signal (109, 209) as scattered by the uniquely structured pattern (101, 201, 301), and
    a signal processor (110, 210) configured to reconstruct the structure of the uniquely structured pattern (101, 201, 301) based on the received superimposed signal (108, 208, 215);
    **characterized in that**
    the signal processor (110, 210) is configured to solve an optimization problem based on the received superimposed signals (108, 208, 215) to reconstruct the structure of the uniquely structured pattern (101, 201, 301); and wherein the uniquely structured pattern (101, 201, 301) comprises position markers (325, 226, 327) and the digital signal processor (110, 210) is configured to determine the position of the position markers (325, 226, 327) and unfold the uniquely structured pattern (101, 201, 301) if the markers are not in a common plane.

2. Wireless identification system (100, 200) according to claim 1, wherein the signal processor (110, 210) is configured to perform regularization on data that forms the basis of the optimization problem and is determined based on the received superimposed signals (108, 208, 215).

3. Wireless identification system (100, 200) according to any one of the preceding claims, wherein the signal processor (110, 210) is configured to determine a 2D image of the uniquely structured pattern (101, 201, 301).

4. Wireless identification system (100, 200) according to claim 3, wherein uniquely structured pattern (101, 201, 301) comprises the structure of a 1D or 2D barcode.

5. Wireless identification system (100, 200) according to any one of the preceding claims, wherein the signal emitter (102, 202) comprises a plurality of emitting antennas (216, 217) and is configured to emit the wireless signal (103, 203) sequentially via each of the emitting antennas (216, 217).

6. Wireless identification system (100, 200) according to any one of the preceding claims, wherein the signal receiver (105, 205) comprises a plurality of receiving antennas (218, 219) and is configured to receive the superimposed signal (108, 208, 215) in parallel via each of the receiving antennas (218, 219).

7. Wireless identification system (100, 200) according to any one of the preceding claims, wherein the signal emitter (102, 202) comprises at least one movable emitting antenna (216, 217) and/or wherein the signal receiver (105, 205) comprises at least one movable receiving antenna (218, 219).

8. Wireless identification method for identifying an object (150, 250) that carries a uniquely structured pattern (101, 201, 301) comprising predefined dielectric properties, the wireless identification method comprising:

    emitting (S1) a wireless signal (103, 203) into an object space (104, 304) that is configured to accommodate the object (150, 250) with the uniquely structured pattern (101, 201, 301),
    receiving (S2) from different positions (106, 107, 206, 207) around the object (150, 250) a superimposed signal (108, 208, 215) caused by a superimposition of the emitted wireless signal (103, 203) and a scattered signal

(109, 209) as scattered by the uniquely structured pattern (101, 201, 301), and
reconstructing (S3) the structure of the uniquely structured pattern (101, 201, 301) based on the received superimposed signal (108, 208, 215),
**characterized in that**
reconstructing (S3) comprises solving an optimization problem based on the received superimposed signals (108, 208, 215) to reconstruct the structure of the uniquely structured pattern (101, 201, 301), and
that the uniquely structured pattern (101, 201, 301) comprises position markers (325, 226, 327) and reconstructing comprises determining the position of the position markers (325, 226, 327) and unfolding the uniquely structured pattern (101, 201, 301) if the markers are not in a common plane.

9. Wireless identification method according to claim 8, wherein solving an optimization problem comprises performing regularization on data that forms the basis of the optimization problem and is determined based on the received superimposed signals (108, 208, 215).

10. Wireless identification method according to any one of the preceding claims 8 and 9, wherein reconstructing (S3) comprises determining a 2D image of the uniquely structured pattern (101, 201, 301), especially wherein uniquely structured pattern (101, 201, 301) comprises the structure of a 1D or 2D barcode.

11. Wireless identification method according to any one of the preceding claims 8 to 10, wherein emitting (S1) is performed with a plurality of emitting antennas (216, 217) sequentially via each of the emitting antennas (216, 217), especially wherein the emitting antennas (216, 217) are movable; and/or
wherein receiving (S2) is performed with a plurality of receiving antennas (218, 219) and the superimposed signal (108, 208, 215) is received in parallel via each of the receiving antennas (218, 219), especially wherein the receiving antennas (218, 219) are movable.

**Patentansprüche**

1. Drahtloses Identifikationssystem (100, 200) zum Identifizieren eines Objekts (150, 250), wobei das drahtlose Identifikationssystem (100, 200) aufweist:

ein eindeutig strukturiertes Muster (101, 201, 301), das vordefinierte dielektrische Eigenschaften aufweist und so konfiguriert ist, dass es an dem Objekt (150, 250) angebracht werden kann,
einen Signalsender (102, 202), der so konfiguriert ist, dass er ein drahtloses Signal (103, 203) in einen Objektraum (104, 304) sendet, der so konfiguriert ist, dass er das Objekt (150, 250) mit dem eindeutig strukturierten Muster (101, 201, 301) aufnimmt,
einen Signalempfänger (105, 205), der so konfiguriert ist, dass er von verschiedenen Positionen (106, 107, 206, 207) um das Objekt (150, 250) herum ein überlagertes Signal (108, 208, 215) empfängt, das durch eine Überlagerung des gesendeten drahtlosen Signals (103, 203) und eines gestreuten Signals (109, 209), wie es durch das eindeutig strukturierte Muster (101, 201, 301) gestreut wird, verursacht wird, und
einen Signalprozessor (110, 210), der so konfiguriert ist, dass er die Struktur des eindeutig strukturierten Musters (101, 201, 301) auf der Grundlage des empfangenen überlagerten Signals (108, 208, 215) rekonstruiert;
**dadurch gekennzeichnet, dass**
der Signalprozessor (110, 210) so konfiguriert ist, dass er ein Optimierungsproblem auf der Grundlage der empfangenen überlagerten Signale (108, 208, 215) löst, um die Struktur des eindeutig strukturierten Musters (101, 201, 301) zu rekonstruieren; und
wobei das eindeutig strukturierte Muster (101, 201, 301) Positionsmarkierungen (325, 226, 327) aufweist und der digitale Signalprozessor (110, 210) so konfiguriert ist, dass er die Position der Positionsmarkierungen (325, 226, 327) bestimmt und das eindeutig strukturierte Muster (101, 201, 301) auffaltet, wenn die Markierungen nicht in einer gemeinsamen Ebene liegen.

2. Drahtloses Identifizierungssystem (100, 200) nach Anspruch 1, wobei der Signalprozessor (110, 210) so konfiguriert ist, dass er eine Regularisierung von Daten durchführt, die die Grundlage des Optimierungsproblems bilden und auf der Grundlage der empfangenen überlagerten Signale (108, 208, 215) bestimmt werden.

3. Drahtloses Identifizierungssystem (100, 200) nach einem der vorhergehenden Ansprüche, wobei der Signalprozessor (110, 210) konfiguriert ist, um ein 2D-Bild des eindeutig strukturierten Musters (101, 201, 301) zu bestimmen.

**4.** Drahtloses Identifizierungssystem (100, 200) nach Anspruch 3, wobei das eindeutig strukturierte Muster (101, 201, 301) die Struktur eines 1D- oder 2D-Strichcodes aufweist.

**5.** Drahtloses Identifizierungssystem (100, 200) nach einem der vorhergehenden Ansprüche, wobei der Signalsender (102, 202) eine Vielzahl von Sendeantennen (216, 217) aufweist und so konfiguriert ist, dass er das drahtlose Signal (103, 203) sequentiell über jede der Sendeantennen (216, 217) aussendet.

**6.** Drahtloses Identifizierungssystem (100, 200) nach einem der vorhergehenden Ansprüche, wobei der Signalempfänger (105, 205) eine Vielzahl von Empfangsantennen (218, 219) aufweist und so konfiguriert ist, dass er das überlagerte Signal (108, 208, 215) parallel über jede der Empfangsantennen (218, 219) empfängt.

**7.** Drahtloses Identifizierungssystem (100, 200) nach einem der vorhergehenden Ansprüche, wobei der Signalsender (102, 202) mindestens eine bewegliche Sendeantenne (216, 217) aufweist und/oder wobei der Signalempfänger (105, 205) mindestens eine bewegliche Empfangsantenne (218, 219) aufweist.

**8.** Drahtloses Identifizierungsverfahren zum Identifizieren eines Objekts (150, 250), dass ein eindeutig strukturiertes Muster (101, 201, 301) trägt, das vordefinierte dielektrische Eigenschaften aufweist, wobei das drahtlose Identifizierungsverfahren umfasst:

Aussenden (S1) eines drahtlosen Signals (103, 203) in einen Objektraum (104, 304), der so konfiguriert ist, dass er das Objekt (150, 250) mit dem eindeutig strukturierten Muster (101, 201, 301) aufnimmt,
Empfangen (S2) eines überlagerten Signals (108, 208, 215) von verschiedenen Positionen (106, 107, 206, 207) um das Objekt (150, 250) herum, das durch eine Überlagerung des gesendeten drahtlosen Signals (103, 203) und eines gestreuten Signals (109, 209), wie es durch das eindeutig strukturierte Muster (101, 201, 301) gestreut wird, verursacht wird, und
Rekonstruieren (S3) der Struktur des eindeutig strukturierten Musters (101, 201, 301) auf der Grundlage des empfangenen überlagerten Signals (108, 208, 215),
**dadurch gekennzeichnet, dass**
das Rekonstruieren (S3) das Lösen eines Optimierungsproblems auf der Grundlage der empfangenen überlagerten Signale (108, 208, 215) aufweist, um die Struktur des eindeutig strukturierten Musters (101, 201, 301) zu rekonstruieren, und
dass das eindeutig strukturierte Muster (101, 201, 301) Positionsmarkierungen (325, 226, 327) aufweist und die Rekonstruktion die Bestimmung der Position der Positionsmarkierungen (325, 226, 327) und die Entfaltung des eindeutig strukturierten Musters (101, 201, 301) umfasst, wenn die Markierungen nicht in einer gemeinsamen Ebene liegen.

**9.** Verfahren zur drahtlosen Identifizierung nach Anspruch 8, wobei das Lösen eines Optimierungsproblems die Durchführung einer Regularisierung von Daten aufweist, die die Grundlage des Optimierungsproblems bilden und auf der Grundlage der empfangenen überlagerten Signale (108, 208, 215) bestimmt werden.

**10.** Verfahren zur drahtlosen Identifizierung nach einem der vorhergehenden Ansprüche 8 und 9, wobei das Rekonstruieren (S3) das Bestimmen eines 2D-Bildes des eindeutig strukturierten Musters (101, 201, 301) umfasst, insbesondere wobei das eindeutig strukturierte Muster (101, 201, 301) die Struktur eines 1D- oder 2D-Strichcodes aufweist.

**11.** Verfahren zur drahtlosen Identifizierung nach einem der vorstehenden Ansprüche 8 bis 10, wobei das Senden (S1) mit einer Vielzahl von Sendeantennen (216, 217) sequentiell über jede der Sendeantennen (216, 217) erfolgt, insbesondere wobei die Sendeantennen (216, 217) beweglich sind; und/oder
wobei der Empfang (S2) mit einer Vielzahl von Empfangsantennen (218, 219) erfolgt und das überlagerte Signal (108, 208, 215) parallel über jede der Empfangsantennen (218, 219) empfangen wird, insbesondere wobei die Empfangsantennen (218, 219) beweglich sind.

**Revendications**

**1.** Système d'identification sans fil (100, 200) pour l'identification d'un objet (150, 250), le système d'identification sans fil (100, 200) comprenant :

un motif à structure unique (101, 201, 301) comprenant des propriétés diélectriques prédéfinies et configuré pour être fixé à l'objet (150, 250),
un émetteur de signal (102, 202) configuré pour émettre un signal sans fil (103, 203) dans un espace objet (104, 304) qui est configuré pour accueillir l'objet (150, 250) avec le motif structuré unique (101, 201, 301),
un récepteur de signaux (105, 205) configuré pour recevoir à partir de différentes positions (106, 107, 206, 207) autour de l'objet (150, 250) un signal superposé (108, 208, 215) causé par une superposition du signal sans fil émis (103, 203) et un signal diffusé (109, 209) tel que diffusé par le motif à structure unique (101, 201, 301), et
un processeur de signal (110, 210) configuré pour reconstruire la structure du modèle à structure unique (101, 201, 301) en fonction du signal superposé reçu (108, 208, 215) ;
**caractérisé en ce que**
le processeur de signaux (110, 210) est configuré pour résoudre un problème d'optimisation basé sur les signaux superposés reçus (108, 208, 215) pour reconstruire la structure du modèle à structure unique (101, 201, 301) dans lequel le motif structuré de façon unique (101, 201, 301) comprend des marqueurs de position (325, 226, 327) et le processeur de signal numérique (110, 210) est configuré pour déterminer la position des marqueurs de position (325, 226, 327) et déplier le motif structuré de façon unique (101, 201, 301) si les marqueurs ne sont pas dans un plan commun.

2. Système d'identification sans fil (100, 200) selon la revendication 1, dans lequel le processeur de signaux (110, 210) est configuré pour effectuer une régularisation sur les données qui constituent la base du problème d'optimisation et est déterminé en fonction des signaux superposés reçus (108, 208, 215).

3. Système d'identification sans fil (100, 200) selon l'une quelconque des revendications précédentes, dans lequel le processeur de signal (110, 210) est configuré pour déterminer une image 2D du modèle à structure unique (101, 201, 301).

4. Système d'identification sans fil (100, 200) selon la revendication 3, dans lequel le motif structuré de façon unique (101, 201, 301) comprend la structure d'un code à barres 1D ou 2D.

5. Système d'identification sans fil (100, 200) selon l'une quelconque des revendications précédentes, dans lequel l'émetteur de signal (102, 202) comprend une pluralité d'antennes émettrices (216, 217) et est configuré pour émettre le signal sans fil (103, 203) séquentiellement via chacune des antennes émettrices (216, 217).

6. Système d'identification sans fil (100, 200) selon l'une quelconque des revendications précédentes, dans lequel le récepteur de signal (105, 205) comprend une pluralité d'antennes de réception (218, 219) et est configuré pour recevoir le signal superposé (108, 208, 215) en parallèle via chacune des antennes de réception (218, 219).

7. Système d'identification sans fil (100, 200) selon l'une quelconque des revendications précédentes, dans lequel l'émetteur de signal (102, 202) comprend au moins une antenne d'émission mobile (216, 217) et/ou dans lequel le récepteur de signal (105, 205) comprend au moins une antenne de réception mobile (218, 219).

8. Méthode d'identification sans fil pour identifier un objet (150, 250) qui porte un motif à structure unique (101, 201, 301) comprenant des propriétés diélectriques prédéfinies, la méthode d'identification sans fil comprenant :

    l'émission (S1) d'un signal sans fil (103, 203) dans un espace objet (104, 304) qui est configuré pour recevoir l'objet (150, 250) avec le motif structuré unique (101, 201, 301), la réception (S2) à partir de différentes positions (106, 107, 206, 207) autour de l'objet (150, 250) d'un signal superposé (108, 208, 215) causé par une superposition du signal sans fil émis (103, 203) et d'un signal diffusé (109, 209) tel que diffusé par le motif à structure unique (101, 201, 301), et
    en reconstruisant (S3) la structure du modèle unique (101, 201, 301) basé sur le signal superposé reçu (108, 208, 215),
    **caractérisé en ce que**
    la reconstruction (S3) consiste à résoudre un problème d'optimisation basé sur les signaux superposés reçus (108, 208, 215) pour reconstruire la structure du modèle à structure unique (101, 201, 301), et
    que le modèle structuré de façon unique (101, 201, 301) comprend des marqueurs de position (325, 226, 327) et que la reconstruction consiste à déterminer la position des marqueurs de position (325, 226, 327) et à déplier le modèle structuré de façon unique (101, 201, 301) si les marqueurs ne sont pas dans un plan commun.

9. Méthode d'identification sans fil selon la revendication 8, dans laquelle la résolution d'un problème d'optimisation comprend l'exécution d'une régularisation sur les données qui forment la base du problème d'optimisation et sont déterminées sur la base des signaux superposés reçus (108, 208, 215).

10. Méthode d'identification sans fil selon l'une quelconque des revendications 8 et 9 précédentes, dans laquelle la reconstruction (S3) comprend la détermination d'une image 2D du motif à structure unique (101, 201, 301), en particulier dans laquelle le motif à structure unique (101, 201, 301) comprend la structure d'un code à barres 1D ou 2D.

11. Méthode d'identification sans fil selon l'une quelconque des revendications précédentes 8 à 10, dans laquelle l'émission (S1) est effectuée avec une pluralité d'antennes émettrices (216, 217) de manière séquentielle via chacune des antennes émettrices (216, 217), en particulier dans laquelle les antennes émettrices (216, 217) sont mobiles ; et/ou
dans lequel la réception (S2) est effectuée avec une pluralité d'antennes de réception (218, 219) et le signal superposé (108, 208, 215) est reçu en parallèle via chacune des antennes de réception (218, 219), en particulier dans lequel les antennes de réception (218, 219) sont mobiles.

Fig. 1

Fig. 2

325

327

326

301

Fig. 3

EP 3 438 885 B1

Fig. 4

**EP 3 438 885 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006125491 A1
- GB 2324396 A
- US 6330939 B1